# FASCICULE DE BREVET EUROPEEN

(11) **EP 0 531 193 B1**
(45) Date de publication et mention de la délivrance du brevet: **14.12.1994**
(21) Numéro de dépôt: 92402362.5
(22) Date de dépôt: 28.08.1992
(51) Int. Cl.: F16F 3/10, F16F 1/46, F01N 7/18, B60K 13/04, F16L 55/033

(54) **Dispositif élastique de support à caractéristique élastique non linéaire**
Elastische Abstützungsvorrichtung mit nicht-linearen elastischen Eigenschaften
Elastic supporting device with non-linear elastic characteristics

(30) Priorité: 02.09.1991 FR 9110832
(43) Date de publication de la demande: 10.03.1993
(73) Titulaire: HUTCHINSON, F-75008 Paris (FR)
(72) Inventeur: Simon, Jean-Michel, F-92140 Clamart (FR); Ciolczyk, Jean-Pierre, F-45120 Chalette s/Loing (FR)
(74) Mandataire: Picard, Jean-Claude Georges

(56) Documents cités:
- EP-A- 0 054 493
- EP-A- 0 315 805
- EP-A- 0 324 693
- EP-A- 0 411 246
- DE-A- 1 505 498
- DE-C- 675 502
- DE-U- 8 714 888
- FR-A- 1 434 349

## Description

La présente invention concerne un dispositif élastique de support à caractéristique élastique non linéaire.

Par l'expression "caractéristique élastique non linéaire", on entend indiquer que la raideur du dispositif devra pouvoir varier avec l'effort qui s'exerce sur lui. Plus particulièrement, on devra disposer de raideurs différentes dans différentes plages bien définies de fonctionnement. Un tel dispositif est connu par exemple par le document DE-A-1505498.

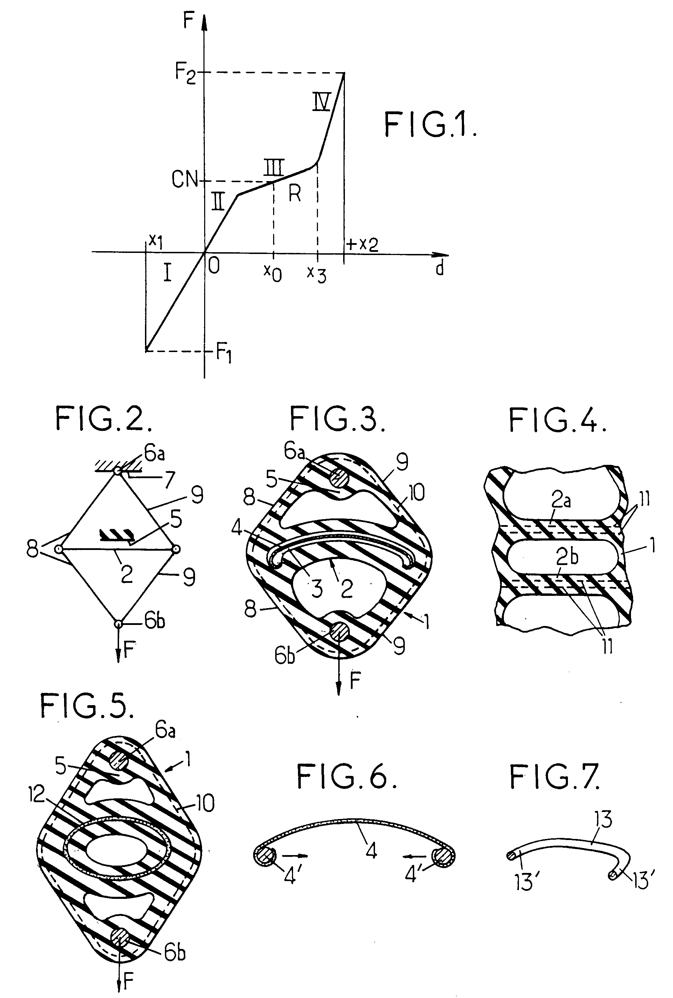

S'agissant par exemple d'un dispositif élastique de suspension pour tubulure d'échappement de véhicule, le graphique représentant les efforts de traction F en fonction des déplacements verticaux d de la tubulure devra idéalement être du type de celui qui a été représenté à la figure 1. Dans la plage "de fonctionnement normal" III, qui s'étend de part et d'autre du point de repos R correspondant à la charge nominale CN pour un positionnement au repos xₒ de la tubulure, la raideur du dispositif devra être faible (pente de F = f(d) faible), ceci pour filtrer les vibrations de la tubulure, et n'en transmettre qu'un minimum à la caisse du véhicule. Par contre, si l'effort de traction vers le bas croit, par exemple par suite d'une forte irrégularité de la surface de roulement sur laquelle le véhicule se déplace, la raideur du dispositif devra être brusquement beaucoup plus grande, pour limiter les déplacements de la tubulure vers le bas, et l'empêcher par exemple de heurter la chaussée. C'est ce qui est représenté dans la partie IV du graphique, où l'on voit que la pente de la courbe a brusquement augmenté.

La pente doit également être beaucoup plus forte dans les zones I et II qui précèdent la zone III, pour la même raison de limitation des débattements vers le haut de la tubulure d'échappement, et d'obtention d'une amplitude des déplacements maxima x₁-x₂ qui ne soit pas prohibitive, compte tenu de l'espace relativement limité dont on dispose entre le fond de la caisse du véhicule et la chaussée. Le fait que la zone I-II s'étende de part et d'autre du point O montre également la nécessité d'obtenir une précontrainte dans le sens vertical ascendant pour compenser le poids de la tubulure, là encore sans débattement excessif.

Le but de la présente invention est donc d'obtenir un dispositif élastique de support, en particulier un dispositif de suspension, qui présente les caractéristiques qui viennent d'être définies, et ceci de la façon la plus simple possible. Le dispositif devra en particulier être facile à fabriquer en grandes séries, et peu coûteux.

A cette fin, un dispositif élastique du type susdéfini sera, conformément à l'invention, du type constitué d'un corps de matériau élastique pourvu de deux organes de liaison, d'une part à un support, d'autre part à une masse à supporter, une liaison élastique entre lesdits organes étant assurée par deux branches relativement rigides dudit corps, ces branches agissant ainsi en parallèle, et étant reliées l'une à l'autre par au moins une traverse élastique, ce dispositif étant caractérisé en ce que ladite traverse est précontrainte en traction, propre à flamber lorsque les efforts appliqués entre lesdits organes de liaison atteignent une valeur prédéterminée, la déformation en flambage de la ou desdites traverses étant stoppée par un système de butée à raideur relativement grande.

Le fonctionnement d'un tel dispositif, ainsi que son mode de réalisation avec variantes, vont maintenant être décrits à titre d'exemples nullement limitatifs, avec référence aux autres figures du dessin ci-annexé dans lequel :
- la figure 2 est un schéma de principe du dispositif ;
- la figure 3 représente en coupe un premier mode de réalisation ;
- les figures 4 et 5 représentent des variantes;
- la figure 6 représente schématiquement une traverse à renforts d'extrémités ; et
- la figure 7 représente une variante de traverse en forme de cavalier élastique.

Sur la figure 2 ainsi que le cas échéant sur les autres figures, on a référencé en 6a et 6b les organes de liaison du dispositif, d'une part à un support 7, par exemple la caisse d'un véhicule à moteur à combustion interne, d'autre part à une masse suspendue, par exemple la tubulure d'échappement du véhicule, simplement symbolisée par une flèche F représentant la force (poids et inertie) développée par la masse suspendue.

Les organes de liaison 6a, 6b sont reliés l'un à l'autre par deux branches relativement rigides en traction 8 et 9, disposées par conséquent en parallèle. Ces deux branches sont reliées l'une à l'autre, pratiquement au niveau de leurs zones médianes respectives, par une traverse élastique précontrainte en traction 2 ; cette traverse 2 est agencée pour flamber lorsque les efforts - en l'occurrence des efforts de traction - s'exerçant entre les organes de traction 6a, 6b, atteignent la valeur prédéterminée repérée par x₃ sur le graphique de la figure 1.

Par une précourbure conférée à cette traverse 2, on peut faire en sorte qu'elle ne flambe que d'un seul côté, de sorte à venir alors brusquement en appui sur une butée élastique à grande raideur, schématisée en 5 sur la figure 2.

Le fonctionnement d'un tel dispositif est alors le suivant : autour du point CN (figure 1), la traverse 2 oppose une résistance élastique relativement faible aux efforts de compression qui s'exercent entre ses extrémités, ce qui fournit au système, entre les organes 6a et 6b, la raideur relativement faible souhaitée de la zone III de la figure 1. On obtient donc la plage "de fonctionnement normal" à faible raideur III, de part et d'autre du point de repos R. Par contre, lorsque les efforts de traction F s'exerçant entre les organes de liaison 6a et 6b atteignent la valeur prédéterminée x₃, les efforts de compression s'exerçant sur les extrémités de la traverse 2 atteignent également une limite, et cette traverse flambe, sa zone centrale venant brusquement en appui sur la butée élastique à forte raideur 5. Cela fournit la forte raideur de la zone IV.

Quant à la précontrainte en traction de la traverse 2, on conçoit qu'elle permet d'obtenir les zones à forte raideur I et II du graphique de la figure 1, puisque grâce à elle il conviendra de soumettre le dispositif à un effort de traction |CN|+|F1|, correspondant au poids de la tubulure d'échappement, avant d'amener le dispositif au point de fonctionnement R.

Dans le mode de réalisation de la figure 3, les organes de liaison 6a et 6b sont constitués par des crochets en acier reliés de façon appropriée, par exemple à la caisse et à la tubulure d'échappement d'un véhicule. Ces crochets traversent des trous prévus dans les zones de jonction de deux branches, connectées en parallèle 8 et 9, d'un corps 1 en élastomère ou analogue. Ce corps 1 a la forme d'une plaque et peut être facilement obtenu par extrusion d'élastomère puis tronçonnage, donc en grandes séries et à faible coût.

Ce corps 1 comporte une traverse courbée 2, à convexité dirigée vers le haut, d'une pièce avec les branches 8 et 9, et possédant un logement en forme de fente arquée 3 dans lequel est monté un ressort métallique (ou en matériau composite) 4. En principe, ce ressort doit exercer une précontrainte en traction entre les zones centrales des branches 8 et 9, pour la raison indiquée plus haut. Il possède donc une forme arquée telle qu'il faudra le pincer (augmentant ainsi sa courbure) pour l'introduire dans ledit logement 4. Pour faciliter cette opération, on peut, comme indiqué sur la figure 6, glisser des renforts 4′ dans les extrémités roulées du ressort, ce qui facilitera son pincement, sa mise en place et son maintien dans le logement 3.

Revenant à la figure 3, on voit que dans les branches du corps 1 en élastomère est inclus également un renfort annulaire 10 en tissu (nylon, fibres de verre..) entourant les organes de liaison 6a et 6b et augmentant donc la résistance à la traction des branches élastiques 8 et 9. Enfin, la butée 5 dont il a été question plus haut est constituée ici par un renflement du corps 1, situé au-dessous du passage pour l'organe de liaison 6a. Du fait de sa courbure à convexité vers le haut, on conçoit que la traverse 2 ne pourra flamber que du côté de cette butée 5, ce qui fournira la zone à forte raideur référencée en IV sur la figure 1.

Dans la vue en coupe partielle de la figure 4, on a montré aussi la possibilité d'utiliser une traverse 2 constituée de deux poutres 2a et 2b espacées et renforcées par des tissus 11.

La variante de la figure 5 montre aussi la possibilité de disposer dans la partie centrale du corps en élastomère 1 un organe tubulaire de renfort 12, par exemple en matériau composite et également propre à flamber sous l'effet des efforts de compression s'exerçant transversalement sur le corps 1 lorsque les efforts de traction s'exerçant entre les organes de liaison 6a et 6b atteignent la valeur prédéterminée x₃.

Enfin la figure 7 montre la possibilité de remplacer le ressort arqué 4 par un étrier métallique et élastique 13 dont les extrémités 13′ seraient engagées dans des trous traversants correspondants du corps 1, cet étrier pouvant être également conformé pour exercer la précontrainte en traction voulue sur le corps 1.

## Revendications

1. Dispositif élastique de support à caractéristique élastique non linéaire, du type constitué d'un corps de matériau élastique (1) pourvu de deux organes de liaison (6a, 6b), d'une part à un support (7), d'autre part à une masse (F) à supporter, une liaison élastique entre lesdits organes (6a, 6b) étant assurée par deux branches relativement rigides (8, 9) dudit corps (1), ces branches agissant ainsi en parallèle, lesdites branches (8, 9) sont reliées l'une à l'autre par au moins une traverse élastique, caractérisé en ce que ladite au moins une traverse est précontrainte en traction (2), propre à flamber lorsque les efforts appliqués entre lesdits organes de liaison (6a, 6b) atteignent une valeur prédéterminée (x₃), la déformation en flambage de la ou desdites traverses (2) étant stoppée par un système de butée (5) à raideur relativement grande.

2. Dispositif selon la revendication 1, caractérisé en ce que ladite traverse (2) est courbée, sa convexité faisant face audit système de butée (5).

3. Dispositif selon la revendication 1 ou 2, caractérisé en ce que ladite traverse (2) comporte un logement (3) pour un ressort métallique ou analogue (4) précontraint en traction.

4. Dispositif selon la revendication 3, caractérisé en ce qu'il comporte des renforts (4′) engagés dans des extrémités roulées dudit ressort (4).

5. Dispositif selon la revendication 1, caractérisé en ce que ladite traverse est constituée de deux poutres (2a, 2b) espacées et renforcées.

6. Dispositif selon la revendication 1, caractérisé en ce que ladite traverse est constituée par un organe tubulaire (12).

7. Dispositif selon la revendication 1, caractérisé en ce que ladite traverse comporte un étrier élastique (13).

8. Dispositif selon l'une quelconque des revendications précédentes, caractérisé en ce que dans les branches (8, 9) dudit corps (1) en matériau élastique est inclus un renfort annulaire (10) entourant lesdits organes de liaison (6a, 6b).

## Claims

1. A resilient support device having a non-linear elastic characteristic, the device being of the type constituted by a body (1) made of a resilient material and provided with two coupling members (6a, 6b) for coupling respectively to a support (7) and to a mass (F) to be supported, resilient connection between said members (6a, 6b) being provided by two relatively rigid branches (8, 9) of said body (1), said branches thus acting in parallel and being connected to each other by at least one resilient crosspiece (2), characterized in that said crosspiece is prestressed in traction and is suitable for buckling when the forces applied between said coupling members (6a, 6b) reach a predetermined value (x₃), the buckling deformation of said crosspiece(es) (2) being stopped by an abutment system (5) of relatively high stiffness.

2. A device according to claim 1, characterized in that said crosspiece (2) is curved, with its convex side facing said abutment system (5).

3. A device according to claim 1 or 2, characterized in that said crosspiece (2) includes a housing (3) for a metal spring (4) or the like which is prestressed in traction.

4. A device according to claim 3, characterized in that it includes reinforcements (4') engaged in rolled ends of said spring (4).

5. A device according to claim 1, characterized in that said crosspiece is constituted by two spaced-apart and reinforced beams (2a, 2b).

6. A device according to claim 1, characterized in that said crosspiece is constituted by a tubular member (12).

7. A device according to claim 1, characterized in that said crosspiece includes a resilient staple (13).

8. A device according to any preceding claim, characterized in that annular reinforcement (10) is included in the branches (8, 9) of said body (1) of resilient material, said reinforcement surrounding said coupling members (6a, 6b).

## Patentansprüche

1. Elastische Abstützvorrichtung mit nicht-linearen elastischen Eigenschaften, die aus einem Körper (1) aus elastischem Material besteht, das mit zwei Organen (6a, 6b) zur Verbindung mit einerseits einer Abstützung (7) und andererseits mit einer abzustützenden Masse (F) versehen ist, wobei eine elastische Verbindung zwischen den beiden Organen (6a, 6b) durch zwei relativ starre Arme (8, 9) des Körpers (1) sichergestellt wird, die somit parallel wirken und miteinander über wenigstens eine elastische Querstrebe (2) verbunden sind, dadurch gekennzeichnet, daß die Querstrebe (2) auf Zug vorgespannt ist und einknicken kann, wenn die zwischen den Verbindungsorganen (6a, 6b) auftretenden Kräfte einen vorgegebenen Wert (x₃) erreichen, wobei die beim Einknicken auftretende Deformation der Querstrebe oder -streben (2) durch ein Anschlagsystem mit einer verhältnismäßig großen Steifigkeit angehalten wird.

2. Vorrichtung nach Anspruch 1, dadurch gekennzeichnet, daß die Querstrebe (2) gekrümmt ist, wobei ihre Konvexität auf das Anschlagsystem (5) gerichtet ist.

3. Vorrichtung nach den Ansprüchen 1 oder 2, dadurch gekennzeichnet, daß die Querstrebe (2) einen Sitz (3) für eine Metallfeder (4) oder dergleichen enthält, die auf Zug vorgespannt ist.

4. Vorrichtung nach Anspruch 3, dadurch gekennzeichnet, daß sie Verstärkungen (4') enthält, die an rund gebogenen Enden der Feder (4) angreifen.

5. Vorrichtung nach Anspruch 1, dadurch gekennzeichnet, daß die Querstrebe aus zwei Trägern (2a, 2b) besteht, die im Abstand voneinander angeordnet und verstärkt sind.

6. Vorrichtung nach Anspruch 1, dadurch gekennzeichnet, daß die Querstrebe aus einem rohrförmigen Teil (12) besteht.

7. Vorrichtung nach Anspruch 1, dadurch gekennzeichnet, daß die Querstrebe einen elastischen Bügel (13) enthält.

8. Vorrichtung nach einem der vorhergehenden Ansprüche, dadurch gekennzeichnet, daß in den Armen (8, 9) des Körpers (1) aus elastischem Material eine ringförmige Verstärkung (10) eingeschlossen ist, die die Verbindungsorgane (6a, 6b) umschließt.
